# FASCICULE DE BREVET EUROPEEN

(11) **EP 0 389 315 B1**
(45) Date de publication et mention de la délivrance du brevet: **12.05.1993**
(21) Numéro de dépôt: 90400470.2
(22) Date de dépôt: 21.02.1990
(51) Int. Cl.: C03B 23/03, C03B 35/16, B65G 49/06

(54) **Positionnement d'une feuille de verre par rapport à des outils de bombage et/ou d'autres traitements thermiques**
Positionierung einer Glasscheibe gegenüber Vorrichtungen zum Biegen und/oder für andere thermische Behandlungen
Positioning of a glass sheet opposite to devices for bending and/or another thermal treatment

(30) Priorité: 24.03.1989 FR 8903934
(43) Date de publication de la demande: 26.09.1990
(73) Titulaire: SAINT-GOBAIN VITRAGE INTERNATIONAL, 92400 Courbevoie (FR)
(72) Inventeur: Petitcollin, Jean-Marc, F-60150 Thourotte (FR); Harle, Gérard-Jean, F-60150 Thourotte (FR)
(74) Mandataire: Menes, Catherine

(56) Documents cités:
- EP-A- 0 003 391
- EP-A- 0 267 120
- US-A- 4 781 745

## Description

L'invention concerne le positionnement d'une feuille de verre par rapport à des outils de bombage et/ou d'autres traitements thermiques. Elle s'applique aux techniques de bombage de feuilles de verre utilisées notamment pour la production de vitrages automobiles et selon lesquelles les feuilles de verre chauffées au-delà de leur température de ramollissement défilent à plat sur un convoyeur avant d'être stoppées sous un élément supérieur généralement en forme contre lequel elles sont appliquées puis sont relâchées sur un élément inférieur au moyen duquel la mise en forme se poursuit éventuellement et/ou au moyen duquel la feuille de verre est transférée à un autre dispositif, notamment un dispositif de refroidissement par trempe thermique.

Dans les techniques de bombage à plat auxquelles il est fait ci-dessus référence, le chauffage des feuilles de verre s'effectue dans un four que les feuilles traversent convoyées sur un lit de rouleaux. Le choix de cadences de production élevées conduit à la fois à des vitesses de convoyage grandes et à des longueurs de fours également grandes. Dans ces conditions, il n'est pas possible de prédire qu'elle sera l'orientation d'une feuille de verre à sa sortie du four. Cette interdiction d'une prédiction exacte s'entend bien sûr de façon relative, la position des feuilles de verre n'étant évidemment pas totalement aléatoire, mais en tout cas l'incertitude qui demeure est suffisante pour entraîner des défauts de formage par non respect du galbe et/ou marquages, sachant que la précision requise du positionnement sous l'élément supérieur est inférieure au millimètre, et généralement de l'ordre de 1/10 à quelques dixièmes de mm.

Différentes techniques de positionnement des feuilles de verre ont été proposées par le passé. Il est ainsi connu par exemple du brevet EP-B-146 442 un dispositif d'enfournement garantissant une position initiale correcte à l'entrée du four. Il est aussi connu des moyens pour rectifier la position d'une feuille de verre dans ou à la sortie du four - avec pour principale difficulté le fait que plus on se rapproche de l'élément supérieur, plus le verre est mou et que par conséquence toute action sur lui risque de générer des défauts optiques.

Au regard de la qualité optique et de la tolérance accordée pour le galbe en fonction du montage futur du vitrage, par exemple dans la carrosserie d'un véhicule automobile, il faut nécessairement un parfait positionnement du bord avant d'une feuille de verre, autrement dit un positionnement frontal correct.

De la demande de brevet EP-A-267 120, il est connu d'orienter la feuille de verre en faisant buter le bord avant contre un volet (ou éventuellement des doigts) escamotable disposé en travers du convoyeur, ce volet retenant la feuille alors que le convoyeur continue à l'entraîner obligeant ainsi la feuille à s'aligner par rapport à ce volet.

Un tel dispositif trouve difficilement sa place dès lors que le bord avant des feuilles n'est pas orienté parallèlement aux rouleaux, ce qui est souvent le cas avec des triangles par exemple destinés notamment aux custodes.

A cet inconvénient auquel on peut remédier par une sophistication des moyens d'escamotage s'ajoute un défaut plus fondamental, à savoir que la mise en référence de la feuille de verre s'effectue uniquement par rapport au convoyeur. Or, les auteurs de la présente invention ont constaté des dérives de positionnement de l'élément supérieur lui-même. En effet, malgré son poids élevé et en raison des déplacements verticaux imposés et des températures élevées auxquelles il est soumis, l'élément supérieur a une position fluctuante par rapport à la verticale du convoyeur. Là encore, il n'est pas question d'une fluctuation dans l'absolu importante, mais elle est sensible compte tenu du degré de précision du positionnement souhaité.

Par ailleurs, rectifier la position de la feuille de verre n'a de sens que dans la mesure où son arrêt est ensuite effectué exactement au moment voulu. Dans la demande de brevet EP-A-267 120 précitée, cet arrêt est obtenu avec un retard réglable par arrêt du convoyeur après rencontre du verre avec un dispositif de détection du type décrit dans le brevet EP-B-217 708. Positionnement et arrêt des feuilles de verre sont ainsi deux opérations indépendantes avec de ce fait le risque que l'orientation d'une feuille de verre soit modifiée entre l'action du volet et l'arrêt. Par ailleurs, l'arrêt de la feuille de verre est obtenu directement par l'arrêt du convoyeur. Si l'élément supérieur a bougé par rapport à ce convoyeur, la position d'arrêt est toujours mauvaise.

Enfin au formage, au moyen de l'élément supérieur vient s'ajouter un traitement sur l'élément inférieur (poursuite du formage et/ou évacuation vers un dispositif de refroidissement). Si la forme supérieure bouge, la position du verre sur l'élément inférieur ne peut plus être déterminée à l'avance et il s'ensuit à nouveau des défauts de bombage et/ou des marquages du verre.

L'invention a pour but des moyens de positionnement d'une feuille de verre par rapport aux outils de bombage et/ou des autres traitements thermiques, notamment par rapport à l'élément supérieur d'une part et à l'élément inférieur d'autre part, afin d'assurer une plus grande uniformité de la production.

Ce but est atteint selon l'invention par un procédé de positionnement d'une feuille de verre par rapport à des outils de bombage et/ou d'autres traitements thermiques au cours d'un traitement selon lequel la feuille de verre chauffée au-delà de sa température de ramollissement défile à plat sur un convoyeur avant d'être stoppée sous un élément supérieur contre lequel elle est appliquée, puis est relâchée sur un élément inférieur ; la position de la feuille de verre par rapport à l'élément supérieur et/ou la position de l'élément supérieur par rapport à l'élément inférieur sont contrôlées par des organes solidaires de l'élément supérieur.

Selon le procédé de bombage employé, l'élément inférieur va jouer un rôle plus ou moins important lors de la mise en forme et pourra éventuellement servir au transfert de la feuille de verre vers un autre dispositif, notamment vers un dispositif de refroidissement par exemple du type trempe thermique.

Selon l'invention le positionnement de la feuille de verre par rapport à l'élément supérieur est obtenu grâce à un dispositif constitué par au moins un butoir fixé directement à l'élément supérieur ou selon une autre variante de l'invention, monté sur un équipage embarqué avec l'élément supérieur, ledit butoir déterminant la position extrême du bord avant de la feuille de verre sous l'élément supérieur.

Le butoir selon l'invention subit exactement les mêmes déplacements que l'élément supérieur. De ce fait, on arrête la feuille de verre sous la position réelle de l'élément supérieur, sans qu'il soit besoin de déterminer plus avant cette dernière. Par ailleurs, le fait que le butoir serve à la fois de point d'arrêt et de moyen de positionnement interdit par définition tout décalage de la feuille de verre entre le moment de son positionnement et celui de son arrêt.

Comme indiqué précédemment la feuille de verre est stoppée dans son défilement par le butoir ce qui sous-entend que le convoyeur est à ce moment toujours en action. Il est toutefois préférable que la vitesse de défilement de la feuille de verre soit faible pour limiter les frottements contre les rouleaux. De toute façon, le convoyeur est arrêté après que la feuille de verre ait été assurément bloquée.

De préférence, l'action des rouleaux sur la feuille de verre est modérée par l'utilisation de moyens aptes à prendre en charge une partie du poids de la feuille de verre. Ces moyens d'allégement sont constitués par exemple par un soufflage d'air chaud ou une aspiration. Avantageusement ces moyens d'allégement sont du même type que ceux utilisés pour l'ascension et le plaquage de la feuille de verre contre l'élément supérieur.

Avantageusement, l'équipage embarqué sur lequel est monté le butoir est constitué par les parois d'un caisson entourant l'élément supérieur. Ce caisson étant de préférence celui destiné à canaliser une aspiration à la périphérie de l'élément supérieur pour un bombage selon lequel l'ascension de la feuille de verre et son plaquage contre l'élément supérieur sont obtenus par une dépression créée au voisinage de la périphérie de la feuille de verre comme il est connu par exemple des publications FR-B-2 085 464, EP-A-240 418 ou EP-A-241 335. Dans un tel cas, le montage du butoir selon l'invention est particulièrement simple étant donné que les parois du caisson ont une forme correspondant au pourtour de la feuille de verre : il suffit donc de prolonger la paroi correspondante du caisson pour obtenir un butoir pour le bord avant de la feuille de verre.

Le butoir est par exemple constitué par un volet ou des butées de préférence au nombre de 2. Ces butées par exemple formées par des ronds peuvent en effet remplir exactement les mêmes fonctions qu'un volet - tout en exerçant un frottement moins important lors de l'ascension de la feuille de verre. Ces butées sont le cas échéant judicieusement réparties le long de la paroi du caisson entourant l'élément supérieur.

Le second type de positionnement proposé selon l'invention est celui de l'élément inférieur par rapport à l'élément supérieur ; autrement dit la garantie d'un positionnement correct de la feuille de verre sur l'élément inférieur alors que l'élément supérieur a comme indiqué précédemment une position en partie incertaine.

Selon l'invention ce positionnement est obtenu aux moyens d'index solidaires respectivement de l'élément supérieur et de l'élément inférieur.

De préférence, ces index sont constitués par des pièces respectivement en forme de couteaux et de fourchettes, les couteaux par exemple solidaires de l'élément supérieur venant se loger entre les deux branches de fourchettes fixées à l'élément inférieur. Avec de tels index, les positions relatives des éléments inférieur et supérieur sont conservées même si l'élément supérieur se dilate différemment de l'élément inférieur.

Ces index sont de préférence placés sur chacun des deux axes médians du rectangle dans lequel l'élément supérieur est inscrit. Si on utilise des couteaux et fourchettes assez longs, ils assurent d'eux-même le guidage de l'élément supérieur lorsqu'il est rapproché de l'élément inférieur et deux index peuvent suffire. Si des couteaux courts sont préférés notamment pour des questions d'encombrement, on utilise de préférence trois ou quatre index.

Aux fourchettes sont de préférence associées des butées placées entre les deux branches, butées qui définissent une distance minimum entre l'élément inférieur et l'élément supérieur, ce qui évite d'écraser une feuille de verre plus qu'il n'est souhaité pour son formage.

Les deux positionnements proposés selon l'invention se référant à la position de l'élément supérieur sont complémentaires, mais apportent chacun une amélioration notable de la qualité des vitrages produits de sorte que la ligne de production peut être équipée seulement de l'un ou de l'autre des moyens proposés.

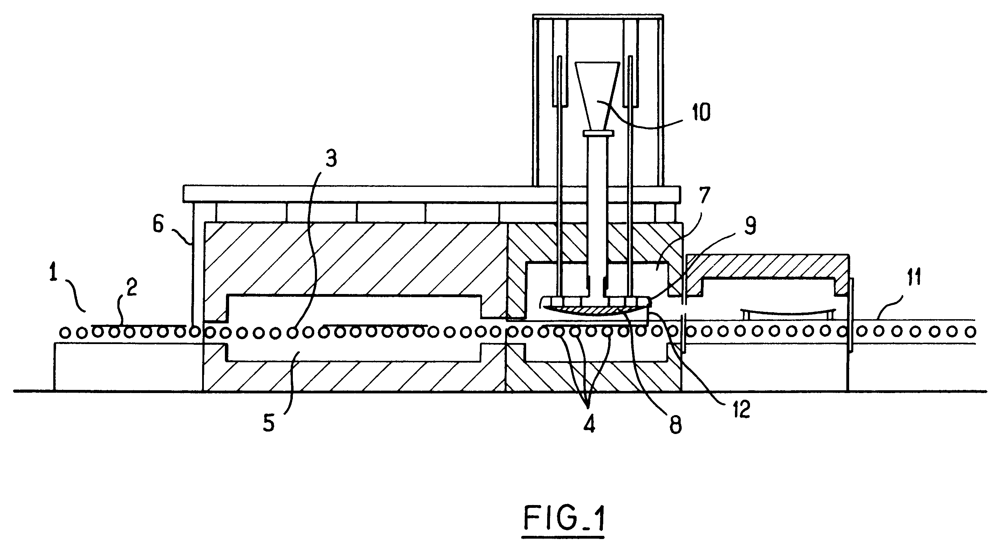

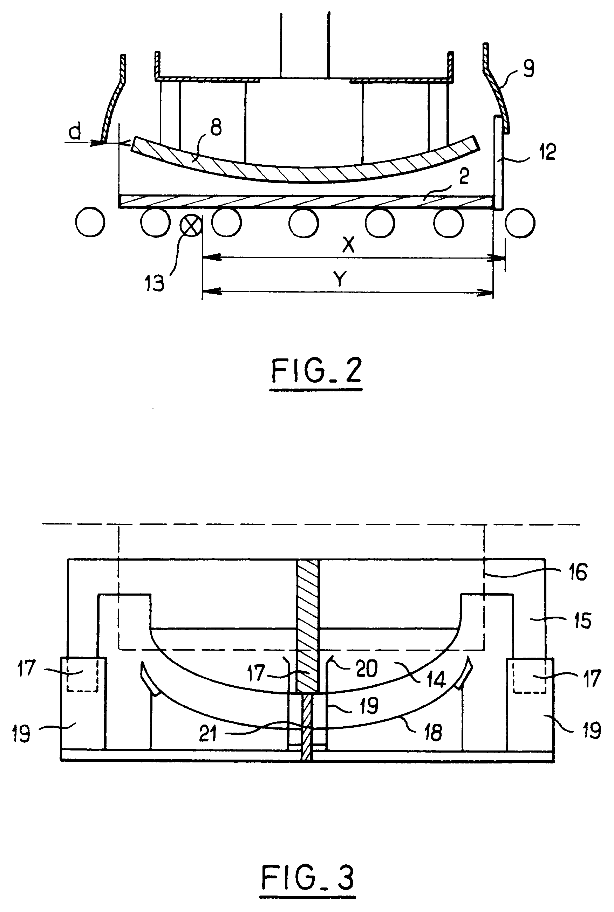

D'autres détails et caractéristiques avantageuses de l'invention sont décrites ci-après en référence aux figures annexées qui représentent :
. **figure 1** : un vue schématique d'une installation de bombage avec un butoir associé à l'élément supérieur selon l'invention,
. **figure 2** : un agrandissement de l'élément supérieur et son butoir.
. **figure 3** : une vue schématique d'un élément supérieur et d'un élément inférieur équipés d'un dispositif de positionnement de l'un par rapport à l'autre par indexage en croix.

La figure 1 est une vue schématique d'une installation de bombage utilisant un élément supérieur. Des détails de telles installations sont connus notamment des publications précitées FR-B-2 085 464, EP-A-240 418 et EP-A-241 335.

Une telle installation comporte une station d'enfournement 1 dans laquelle les feuilles de verre 2 sont déposées sur un convoyeur 3, ici constitué par un lit de rouleaux moteurs 4. Par ce convoyeur 3, les feuilles de verre sont introduites dans un four 5 fermé par un rideau 6. Dans ce four 5 les feuilles de verre s'échauffent progressivement en défilant les unes derrière les autres. A l'extrémité du four 5, les feuilles pénètrent dans une station de bombage 7. La station de bombage 7 comporte un élément supérieur 8 sous lequel vient s'immobiliser la feuille de verre. Cet élément supérieur 8 est ici constitué par une forme de bombage dont la courbure correspond pour toute ou partie à la courbure définitive que l'on souhaite conférer à la feuille de verre. Dans certains cas la courbure peut être différente de la courbure souhaitée ou encore la forme de bombage peut être plate, sans que l'on cherche alors à préformer la feuille de verre. Cette forme de bombage 8 est placée dans un caisson 9 sans fond dont l'ouverture correspond aux dimensions de la plaque de verre - avec une légère surcote pour permettre à la feuille de verre de pénétrer dans le caisson 9. Ce caisson 9 est relié à une ou des trompes d'aspiration 10 permettant de créer une dépression dans le caisson 9 apte à soulever la feuille de verre et à la plaquer contre la forme 8. Caisson 9 et forme 8 sont deux éléments fixes l'un par rapport à l'autre, mais pouvant être tous deux remontés de sorte qu'un élément inférieur circulant sur des rails 11 puisse venir se loger sous l'élément supérieur 8 pour récupérer une feuille de verre et la conduire par exemple à un dispositif de refroidissement par trempe thermique. Sur le caisson est monté un butoir 12 qui interdit à une feuille de verre 2 de continuer plus aval son chemin sur le convoyeur 3.

Si on se réfère maintenant à la figure 2 où est schématisée une feuille de verre en cours de positionnement, on note que l'ouverture du caisson d'aspiration 9 est légèrement plus grande que la plaque de verre 2 avant son bombage et qu'il existe une surcote "d" destinée à éviter tout risque de marquage, surtout lorsque les parois du caisson descendent suffisamment pour encadrer toute ou partie de l'élément supérieur 8, ce qui n'est pas le cas ici représenté, mais est conforme à des variantes de ces procédés de bombage connus par exemple de FR-B-2 085 464.

Selon l'invention, du côté du bord avant de la feuille de verre 2, cette surcote "d" est utilisée pour loger un butoir 12 de préférence constitué par deux ronds fixés à la paroi intérieure du caisson d'aspiration 9 et dont l'épaisseur correspond à la distance "d". Lorsqu'une feuille de verre 2 est en butée contre les deux ronds 12, elle est donc parfaitement positionnée sous l'élément supérieur.

Le positionnement et l'arrêt d'une feuille de verre s'opèrent comme suit : une feuille de verre 2 défilant sur le convoyeur 3 est détectée par un détecteur sans contact 13. Ce détecteur fait passer le convoyeur 3 en vitesse lente et commande de plus l'arrêt du convoyeur 3 après une temporisation suffisante pour que le bord avant de la feuille de verre puisse encore parcourir une distance "X". Cette distance "X" est choisie légèrement plus grande que la distance "Y" qui reste à parcourir à la feuille de verre pour atteindre le butoir 12, l'écart "X-Y" étant de préférence inférieur à 10 mm. L'écart "X-Y" doit être supérieur ou égal au plus grand décalage du bord avant jamais constaté de façon à réorienter systématiquement toute feuille de verre. Ainsi - et quelque puisse être la position du caisson 9 et de l'élément supérieur 8 qui lui est associé, la feuille de verre est toujours parfaitement positionnée par rapport à cet élément supérieur.

Il doit être noté que de façon surprenante le léger frottement du bord avant de la feuille de verre lors de l'ascension vers l'élément supérieur n'entraîne pas de défaut particulier sur le verre. On n'observe pas de marquage gênant de la feuille de verre. Ce frottement entraîne pourtant un léger retard dans l'ascension du bord avant par rapport à celle du bord arrière, mais ce retard ne se traduit pas par un défaut de galbe et/ou un défaut optique.

Les butées peuvent être montées mobiles et sont alors associées à des moyens permettant de les écarter si besoin est, par exemple du type vérins ou contrepoids.

Le dispositif de positionnement selon l'invention peut avantageusement être utilisé dans une installation de bombage à capacité élevée comportant la possibilité de bomber simultanément plusieurs plaques, telle que décrite dans la demande de brevet EP-A-267 121. Il suffit pour cela de descendre l'ensemble portant les éléments supérieurs seulement après que l'avant dernière feuille de verre ait dépassé la zone que doit occuper le butoir du dernier élément supérieur, l'ordre des éléments supérieurs et des feuilles étant par définition croissant dans le sens de défilement des feuilles de verre. Dans tous les cas, la distance entre deux feuilles de verre est en effet suffisante pour que la descente du butoir puisse être effectuée sans risque d'endommager le verre.

Plus haut a été illustré le cas d'un élément supérieur constitué par une forme de bombage courbe montée dans un caisson d'aspiration de plus grandes dimensions que la plaque de verre. D'autres dispositifs de bombage peuvent être utilisés sans sortir du cadre de l'invention. Ainsi, il est connu d'utiliser un caisson d'aspiration plus petit que la plaque de verre et à la limite plus petit que la forme de bombage. Dans ce cas, les butées seront montées non pas à l'intérieur, mais à l'extérieur du caisson en utilisant des pattes d'accrochage adaptées.

D'autre part, il a été plus spécialement fait référence au cas où pour le bombage même l'élément supérieur est systématiquement associé à un équipage qui lui est solidaire - à savoir le caisson d'aspiration. Mais il va de soi que ce caisson peut ne servir que de support aux butées selon l'invention, ce qui est le cas lorsqu'on utilise un élément supérieur muni d'orifices d'aspiration ou lorsque le verre est soulevé par un courant d'air chaud ascendant. Enfin, il importe peu que l'élément supérieur soit ou non courbe. Par ailleurs, lorsque la forme de bombage utilisée le permet, les butées peuvent être montées directement sur celle-ci au moyen de pattes d'accrochage fixées à l'arrière ou sur les cotés de la forme de bombage.

La figure 3 est une illustration du positionnement l'élément supérieur par rapport à l'élément inférieur. On a ici figuré un élément supérieur 14 constituant une forme de bombage fixé à un cadre 15. Eventuellement cette forme de bombage 14 est entourée d'un caisson sous dépression 16, sans fond. Sur le cadre 15 sont fixés des couteaux 17.

A cet élément supérieur 14 correspond un élément inférieur 18 constitué de préférence par un cadre ouvert en son centre et sur lequel la feuille de verre doit être relâchée. Sur cet élément inférieur 18 sont fixées des fourchettes 19 entre les branches desquelles peuvent glisser les couteaux 17. Les branches des fourchettes ont des extrémités 20 évasées de façon à guider les couteaux 17.

On utilise de préférence trois ou quatre ensembles de couteaux et fourchettes, de toute façon placés sur les deux axes médians de l'élément supérieur de façon à obtenir un indexage sur deux axes perpendiculaires.

D'autres types d'index sont susceptibles d'être utilisés tels que des doigts, mais les systèmes de couteaux et fourchettes sont préférés, car même après que le positionnement ait été effectué ils autorisent des dilatations différentes de l'élément supérieur et de l'élément inférieur.

Avantageusement au moins une des fourchettes 19 contient une butée 21 contre laquelle vient heurter l'extrémité d'un couteau 17 de l'élément supérieur 14, de sorte que celui-ci ne peut descendre en deçà d'une hauteur donnée.

Le positionnement de l'élément supérieur par rapport à l'élément inférieur vient de préférence s'ajouter à un positionnement de la feuille de verre par rapport à cet élément supérieur.

## Revendications

1. Procédé de positionnement d'une feuille de verre par rapport à des outils de bombage et/ou d'autres traitements thermiques au cours d'un traitement selon lequel la feuille de verre (2) chauffée au-delà de sa température de ramollissement défile à plat sur un convoyeur (3) avant d'être stoppée sous un élément supérieur (8) contre lequel elle est appliquée, puis est relâchée sur un élément inférieur (10), **caractérisé en ce que** la position de la feuille de verre (2) par rapport à l'élément supérieur (8) et/ou la position de l'élément supérieur (8) par rapport à l'élément inférieur (10) sont contrôlées par des organes solidaires de l'élément supérieur (8).

2. Dispositif de positionnement (1) appliqué aux techniques de bombage de feuilles de verre (2) selon lesquelles les feuilles de verre chauffées au-delà de leur température de ramollissement défilent à plat sur un convoyeur (3) avant d'être stoppées sous un élément supérieur (8) contre lequel elles sont appliquées, puis sont relâchées sur un élément inférieur (10) **caractérisé en ce qu**'il est constitué par au moins un butoir (12) fixé directement sur l'élément supérieur ou monté sur un équipage embarqué (9) avec ledit élément supérieur (8), ledit butoir (12) déterminant une des positions extrêmes des bords de la feuille de verre (2) sous l'élément supérieur (8).

3. Dispositif de positionnement (1) selon la revendication 2, **caractérisé en ce qu**'il est placé en regard du bord avant de la feuille de verre pour un positionnement frontal.

4. Dispositif de positionnement (1) selon la revendication 2 ou 3, **caractérisé en ce qu**'il comporte en outre des moyens aptes à prendre en charge une partie du poids de la feuille de verre lors de son positionnement.

5. Dispositif de positionnement (1) selon l'une des revendications 2 à 4, **caractérisé en ce que** ledit équipage est constitué par le caisson (9) dans lequel est monté l'élément supérieur (8).

6. Dispositif de positionnement (1) selon l'une des revendications 2 à 5, **caractérisé en ce qu**'il comporte en outre un détecteur sans contact (13).

7. Dispositif de positionnement (1) selon l'une des revendications 2 à 6, **caractérisé en ce que** le butoir est constitué par un volet.

8. Dispositif de positionnement (1) selon l'une des revendications 2 à 7, **caractérisé en ce que** le butoir est constitué par deux butées (12).

9. Dispositif de positionnement (1) selon l'une des revendications 2 à 8, **caractérisé en ce que** le butoir est mobile et peut être écarté par des moyens appropriés.

10. Dispositif de positionnement d'une feuille de verre par rapport à des outils de bombage et/ou d'autres traitements thermiques au cours d'un traitement selon lequel la feuille de verre (2) chauffée au-delà de sa température de ramollissement défile à plat sur un convoyeur (3) avant d'être stoppée sous un élément supérieur (8) généralement en forme contre lequel elle est appliquée, puis est relâchée sur un élément inférieur (10) au moyen duquel la mise en forme se poursuit éventuellement et/ou la feuille de verre est transférée à un autre dispositif, notamment un dispositif de refroidissement par trempe thermique, **caractérisé en ce que** la position correcte de l'élément supérieur (14) en regard de l'élément inférieur (18) est obtenu aux moyens d'index solidaires respectivement de l'élément supérieur (14) et de l'élément inférieur (18).

11. Dispositif de positionnement selon la revendication 10, **caractérisé en ce qu'**il comporte en outre un dispositif de positionnement de la feuille de verre selon l'une des revendications 2 à 9.

12. Dispositif de positionnement d'une feuille de verre selon l'une des revendications 10 ou 11, **caractérisé en ce que** lesdits index sont montés selon deux axes perpendiculaires.

13. Dispositif de positionnement d'une feuille de verre selon l'une des revendications 10 à 12, **caractérisé en ce que** lesdits index sont du type couteaux (17) et fourchettes (19).

14. Dispositif de positionnement d'une feuille de verre selon l'une des revendications 10 à 13, **caractérisé en ce** **que** des butées (21) sont placées entre les branches des fourchettes (19).

## Patentansprüche

1. Verfahren zur Positionierung einer Glasscheibe bezügl. Werkzeugen zum Biegen und/oder anderen Wärmebehandlungsverfahren während einer Bearbeitung, bei der die über ihre Erweichungstemperatur hinaus erwärmte Glasscheibe (2) liegend auf einer Fördereinrichtung (3) transportiert wird, bevor sie unter einem oberen Bauteil (8) angehalten wird, an das sie angelegt wird, und danach an ein unteres Bauteil (10) abgegeben wird, **dadurch gekennzeichnet, daß** die Position der Glasscheibe (2) bezüglich des oberen Bauteils (8) und/oder die Position des oberen Bauteils (8) bezüglich des unteren Bauteils (10) über eine mit dem oberen Bauteil (8) verbundene Einrichtung gesteuert werden.

2. Positionierungsvorrichtung (1), die für Biegeverfahren für Glasscheiben (2) verwendet wird, bei denen die über ihre Erweichungstemperatur hinaus erwärmten Glasscheiben liegend auf einer Fördereinrichtung (3) transportiert werden, bevor sie unter einem oberen Bauteil (8) angehalten werden, an das sie angelegt werden, und danach an ein unteres Bauteil (10) abgegeben werden, **dadurch gekennzeichnet, daß** sie aus mindestens einem Anschlag (12) gebildet ist, der direkt auf dem oberen Bauteil befestigt oder auf einem mit dem oberen Bauteil (8) gekoppelten Element (9) montiert ist, wobei der Anschlag (12) eine der Endpositionen der Ränder der Glasscheibe (2) unter dem oberen Bauteil (8) festlegt.

3. Positionierungsvorrichtung (1) nach Anspruch 2, **dadurch gekennzeichnet, daß** sie gegenüber dem vorderen Rand der Glasscheibe für eine frontale Positionierung angeordnet ist.

4. Positionierungsvorrichtung (1) nach Anspruch 2 oder 3, **dadurch gekennzeichnet, daß** sie außerdem eine Einrichtung aufweist, die dazu geeignet ist, einen Teil des Gewichts der Glasscheibe bei deren Positionierung aufzunehmen.

5. Positionierungsvorrichtung (1) nach einem der Ansprüche 2 bis 4, **dadurch gekennzeichnet, daß** das Element von dem Gehäuse (9), in dem das obere Bauteil (8) angebracht ist, gebildet ist.

6. Positionierungsvorrichtung (1) nach einem der Ansprüche 2 bis 5, **dadurch gekennzeichnet, daß** sie außerdem einen kontaktlosen Sensor (13) aufweist.

7. Positionierungsvorrichtung (1) nach einem der Ansprüche 2 bis 6, **dadurch gekennzeichnet, daß** der Anschlag aus einem klappenartigen Teil gebildet ist.

8. Positionierungsvorrichtung (1) nach einem der Ansprüche 2 bis 7, **dadurch gekennzeichnet,** **daß** der Anschlag aus zwei Anschlagteilen (12) gebildet ist.

9. Positionierungsvorrichtung (1) nach einem der Ansprüche 2 bis 8, **dadurch gekennzeichnet, daß** der beschlag beweglich ist und durch eine entsprechende Einrichtung entfernt werden kann.

10. Vorrichtung zur Positionierung einer Glasscheibe bezüglich Werkzeugen zum Biegen und/oder anderen Wärmebehandlungsverfahren während einer Bearbeitung, bei der die über ihre Erweichungstemperatur hinaus erwärmte Glasscheibe (2) liegend auf einer Fördereinrichtung (3) transportiert wird, bevor sie unter einem oberen, im allgemeinen als Formteil ausgebildeten Bauteil (8) angehalten wird, an das sie angelegt wird, und danach auf einem unteren Bauteil (10) abgelegt wird, mittels dessen die Formgebung gegebenenfalls fortgeführt wird und/oder die Glasscheibe auf eine andere Vorrichtung transportiert wird, insbesondere eine Abkühlvorrichtung zur thermischen Vorspannung, **dadurch gekennzeichnet, daß** die korrekte Position des oberen Bauteils (14) bezüglich des unteren Bauteils (18) mittels jeweils mit dem oberen Bauteil (14) und dem unteren Bauteil (18) verbundenen Ausrichteinrichtungen erhalten wird.

11. Vorrichtung zur Positionierung nach Anspruch 10, **dadurch gekennzeichnet, daß** sie außerdem eine Vorrichtung zur Positionierung der Glasscheibe nach einem der Ansprüche 2 bis 9 aufweist.

12. Vorrichtung zur Positionierung einer Glasscheibe nach einem der Ansprüche 10 oder 11, **dadurch gekennzeichnet, daß** die Ausrichteinrichtungen entlang zweier senkrechter Achsen angebracht sind.

13. Vorrichtung zur Positionierung einer Glasscheibe nach einem der Ansprüche 10 bis 12, **dadurch gekennzeichnet, daß** die Ausrichteinrichtungen aus gabelartigen Gliedern (19) und Eingriffsgliedern (17) gebildet sind.

14. Vorrichtung zur Positionierung einer Glasscheibe nach einem der Ansprüche 10 bis 13, **dadurch gekennzeichnet, daß** die Anschlagteile (21) zwischen den Zinken der gabelartigen Glieder (19) angeordnet sind.

## Claims

1. Method of positioning a glass sheet relative to tools for bending and/or other thermal treatments, during the course of a treatment according to which the glass sheet (2), heated above its softening temperature, travels flat on a conveyor (3) before being stopped beneath an upper element (8), against which it is applied, then is released onto a lower element (10), characterized in that the position of the glass sheet (2) relative to the upper element (8) and/or the position of the upper element (8) relative to the lower element (10) are controlled by members integral with the upper element (8).

2. Positioning device (1) applied to the techniques of bending glass sheets (2) according to which the glass sheets, heated above their softening temperature, travel flat on a conveyor (3) before being stopped beneath an upper element (8), against which they are applied, then are released onto a lower element (10), characterized in that the device is constituted of at least one stop (12) fixed directly to the upper element or mounted on an equipment unit fixed (9) to said upper element (8), said stop (12) determining one of the extreme positions of the edges of the glass sheet (2) beneath the upper element (8).

3. Positioning device (1) according to Claim 2, characterized in that it is placed opposite the front edge of the glass sheet for a frontal positioning.

4. Positioning device (1) according to Claim 2 or 3, characterized in that it comprises, in addition, means adapted for taking over a portion of the weight of the glass sheet during its positioning.

5. Positioning device (1) according to one of Claims 2 to 4, characterized in that said equipment unit is constituted of the box (9) in which the upper element (8) is mounted.

6. Positioning device (1) according to one of Claims 2 to 5, characterized in that it comprises, in addition, a contactless detector (13).

7. Positioning device (1) according to one of Claims 2 to 6, characterized in that the stop is constituted of a flap.

8. Positioning device (1) according to one of Claims 2 to 7, characterized in that the stop is constituted of two abutments (12).

9. Positioning device (1) according to one of Claims 2 to 8, characterized in that the stop is movable and can be retracted by appropriate means.

10. Device for positioning a glass sheet relative to tools for bending and/or other thermal treatments, during the course of a treatment according to which the glass sheet (2), heated above its softening temperature, travels flat on a conveyor (3) before being stopped beneath an upper element (8), generally shaped element, against which it is applied, then is released onto a lower element (10) by means of which the shaping may optionally be continued and/or the glass sheet is transferred to another device, notably a device for cooling by thermal toughening, characterized in that the correct position of the upper element (14) opposite the lower element (18) is obtained by means of indexes integral, respectively, with the upper element (14) and the lower element (18).

11. Positioning device according to Claim 10, characterized in that it comprises, in addition, a device for positioning the glass sheet according to one of Claims 2 to 9.

12. Positioning device for a glass sheet according to one of Claims 10 or 11, characterized in that said indexes are mounted on two mutually perpendicular axes.

13. Positioning device for a glass sheet according to one of Claims 10 to 12, characterized in that said indexes are of the knife (17) and fork (19) type.

14. Positioning device for a glass sheet according to one of Claims 10 to 13, characterized in that abutments (21) are placed between the prongs of the forks (19).
